# EUROPEAN PATENT SPECIFICATION

(11) **EP 3 422 314 B1**
(45) Date of publication and mention of the grant of the patent: **11.08.2021**
(21) Application number: 16891531.2
(22) Date of filing: 26.02.2016
(51) Int. Cl.: G08B 17/06, B61D 37/00, H01M 10/42, H01M 10/48, B61L 15/00

(54) **FIRE SENSING SYSTEM FOR RAILWAY CARRIAGE**
BRANDMELDESYSTEM FÜR EISENBAHNWAGEN
SYSTÈME DE DÉTECTION D'INCENDIE POUR VÉHICULE FERROVIAIRE

(43) Date of publication of application: 02.01.2019
(73) Proprietor: Japan Transport Engineering Company, Kanagawa 236-0043 (JP)
(72) Inventor: HIRABAYASHI, Kenichi, Yokohama-shi Kanagawa 236-0043 (JP); YAMAMOTO,Toru, Yokohama-shi Kanagawa 236-0043 (JP); OKABE,Hiroaki, Yokohama-shi Kanagawa 236-0043 (JP)
(74) Representative: SSM Sandmair
(86) International application number: PCT/JP2016/055871
(87) International publication number: WO 2017/145374

(56) References cited:
- WO-A1-2005/022478
- DE-A1- 2 335 789
- JP-A- H09 287 371
- JP-A- 2004 226 348
- KR-B1- 101 253 308

## Description

### [TECHNICAL FIELD]

The present invention relates to a fire sensing system for a railway carriage, especially it relates to a fire sensing system for a railway carriage that senses a fire caused by heat-generating devices installed in a box body mounted on the railway carriage.

### [BACKGROUND ART]

A railway carriage carries a storage battery for the purpose of securing emergency power supply, etc. The storage battery is normally stored in a storage battery case placed under the floor of the railway carriage, so that the storage battery may generate heat and produce gas while the railway carriage is running. Thus, if the storage battery causes a fire, in order that the train crew can immediately recognize the fire, a fire sensing device is adopted for the railway carriage (for example, see Patent Literature 1).

### [PRIOR ART DOCUMENT]

### Patent Literature

Patent Literature 1: Japanese Patent Application Laid-Open No. 2015-37015,
Patent document KR 101 253 308 B1 discloses a further fire sensing system for a railway carriage.

### [SUMMARY OF INVENTION]

### Problems to be solved by Invention

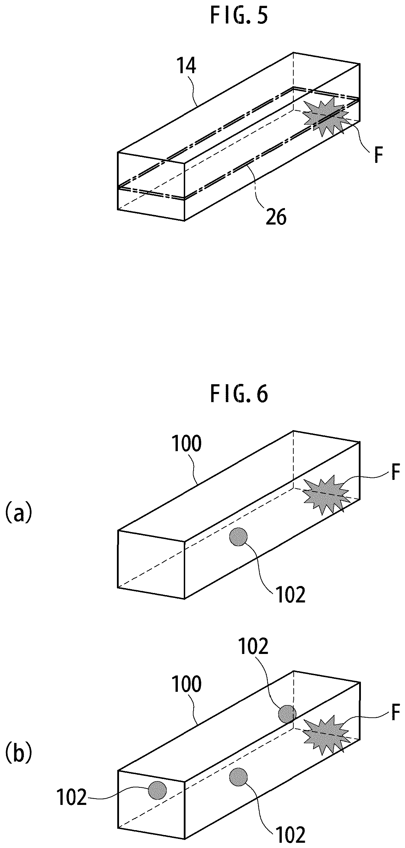

Now, regarding the method for sensing a fire caused by a storage battery stored within a storage battery case, thinking a case that a fire sensing system is adopted in the engine room of conventional diesel railcars, as shown in FIG. 6(a), it would have an embodiment where a single fire sensing sensor 102 such as a heat detector, a smoke detector and a flame detector is arranged in an appropriate position in a storage battery case 100. In this case, when a fire location F is away from the sensor, the fire sensing sensor 102 should sense the fire after the temperature in the storage battery case 100 has risen due to fire spreading to other storage batteries. Accordingly, there is the problem that a time lag enlarges between when the fire starts and when the fire is sensed.

Thus, as shown in FIG. 6(b), suppose the fire sensing sensor 102 is placed at plural positions in the storage battery case 100, regardless of the positions where a fire starts, the fire sensing sensor 102 close to the positions of the fire can sense the fire at an early stage. On the other hand, when the number of fire sensing sensors 102 increases, misdetection, such as detecting temperature variations caused by the sunshine would become more possible.

The present invention which is defined by the features of claim 1 has been achieved in view of the above problems, and the aim of the present invention is to improve sensing accuracy in a fire sensing system for a railway carriage that senses a fire caused by heat-generating devices installed in a box body mounted on the railway carriage.

### [MEANS TO SOLVE THE ABOVE PROBLEMS]

### (Aspects of the Present Invention)

Each following aspect of the present invention exemplifies the constitution of the present invention and is explained with an item separately for making the various constitutions of the present invention easily understood. The item should not limit the technical scope of the present invention, and even if any part recited in the constituent elements of each item is changed, deleted or further added with other constituent elements with reference to the best mode for carrying out the invention, those should be included in the technical scope of the present invention.

There is provided a fire sensing system for a railway carriage that senses a fire caused by a heat-generating device installed in a box body mounted on the railway carriage, the fire sensing system comprising: a fire sensing portion that senses a fire in the heat-generating device; and a fire alarm portion to be activated when the fire sensing portion senses the fire, wherein the fire sensing portion includes: a primary feeder circuit to be electrified in a normal state; an auxiliary feeder circuit that is arranged parallel to the primary feeder circuit and that is electrified due to the fire in the heat-generating device; and a switch part that turns off the primary feeder circuit and the auxiliary feeder circuit upon the electrification of the auxiliary feeder circuit, the primary feeder circuit and the switch part are arranged in a place not directly affected by heat of the heat-generating device, and the fire alarm portion is provided with a fire alarm circuit that is turned off in a normal state and is electrified upon deactivation of the primary feeder circuit as a trigger (Claim 1).

In the fire sensing system for the railway carriage according to claim 1, in a normal state, that is, in a condition that the heat-generating device does not cause a fire (or in a condition that the effect of heat caused by the fire in the heat-generating device does not affect the interior of the box body), the primary feeder circuit of the fire sensing portion is being electrified. During this period, the fire alarm circuit of the fire alarm portion has been turned off so that the fire alarm portion is in a non-operative condition. On the other hand, in an emergency, that is, in a condition that the heat-generating device causes a fire (or in a condition that the effect of heat caused by the fire in the heat-generating device affects the interior of the box body), the auxiliary feeder circuit arranged parallel to the primary feeder circuit will be electrified. Upon the electrification of the auxiliary feeder circuit, the switch part will turn off the primary feeder circuit and the auxiliary feeder circuit. Then, upon the deactivation of the primary feeder circuit as a trigger, the fire alarm circuit of the fire alarm portion is electrified so as to activate the fire alarm portion.

Upon the electrification of the auxiliary feeder circuit as the initiator, the fire alarm portion will be activated while the switch part is turning off the primary feeder circuit and the auxiliary feeder circuit. Accordingly, even if the primary feeder circuit or the auxiliary feeder circuit is burnt out (lost), the fire alarm circuit is still electrified while the primary feeder circuit and the auxiliary feeder circuit are turned off due to the loss. This structure of the circuits thus allows the fire alarm portion to be activated without interruption. Further, since the primary feeder circuit and the switch part are arranged in a place not directly affected by the heat of the heat-generating device, there is no danger that the primary feeder circuit and the switch part will be burnt out before the switch part turns off the primary feeder circuit and the auxiliary feeder circuit upon the electrification of the auxiliary feeder circuit.

There is provided the fire sensing system for the railway carriage according to claim 1 wherein the auxiliary feeder circuit is provided with a short-circuit induction wiring, the short-circuit induction wiring being structured in: a pair of parallel lead wires in which to be insulated from each other with a coating layer; being wired in the box body; and making the pair of parallel lead wires short-circuited by melting the coating layer as temperature in the box body rises (Claim 2).

In the fire sensing system for the railway carriage according to claim 2, the auxiliary feeder circuit is provided with the short-circuit induction wiring. Since this short-circuit induction wiring will be short-circuited due to the temperature increase in the box body by the fire in the heat-generating device, the auxiliary feeder circuit will be electrified as the same with claim 1. Here, the short-circuit induction wiring may be installed in such a manner as to cover the whole inner surface of the box body. By installing the short-circuit induction wiring in this manner, it would be possible for the short-circuit induction wiring to be placed nearby a fire location regardless where the fire location is. The coating layer of the short-circuit induction wiring placed close to the fire location will be melted due to the temperature increase and be short-circuited. That is, with the short-circuit induction wiring, it would be possible to make the whole inner surface of the box body to be, namely the fire sensing portion.

There is provided the fire sensing system for the railway carriage according to claim 1 or claim 2 wherein the switch part includes: a primary normally opened contact arranged in series with the primary feeder circuit; an auxiliary normally opened contact arranged in series with the auxiliary feeder circuit; and a first circuit breaker that is arranged in series with the auxiliary feeder circuit and that switches the primary normally opened contact and the auxiliary normally opened contact to a circuit break position upon the electrification of the auxiliary feeder circuit (Claim 3).

In the fire sensing system for the railway carriage according to claim 3, the system is normally in the condition that the primary feeder circuit is electrified while the auxiliary feeder circuit is not electrified. Thus, in the switch part, the first circuit breaker will not switch the primary normally opened contact arranged in series with the primary feeder circuit and the auxiliary normally opened contact arranged in in series with the auxiliary feeder circuit, to a circuit break position. Accordingly, both the primary normally opened contact and the auxiliary normally opened contact will be kept in a conduction position. As explained, in a normal state the primary feeder circuit will not be turned off in the switch part and will be kept in a conduction state. On the other hand, in an emergency the auxiliary feeder circuit arranged parallel to the primary feeder circuit will be electrified, so that the primary normally opened contact and the auxiliary normally opened contact are switched to a circuit break position by the first circuit breaker arranged in series with the auxiliary feeder circuit. As a result, the primary feeder circuit and the auxiliary feeder circuit are both turned off, so that as the same with claim 1, upon the deactivation of the primary feeder circuit as a trigger, the fire alarm circuit of the fire alarm portion is electrified so as to activate the fire alarm portion.

There is provided the fire sensing system for the railway carriage according to any one of claims 1 to 3 wherein the fire alarm circuit includes a normally closed contact to activate the fire alarm portion, and the primary feeder circuit is provided with a secondary circuit breaker that switches the normally closed contact to a connecting position when turned off (Claim 4).

In the fire sensing system for the railway carriage according to claim 4, upon the deactivation of the primary feeder circuit, the second circuit breaker provided in the primary feeder circuit will switch the normally closed contact of the fire alarm circuit to the connecting position. Thus, the fire alarm circuit is electrified so as to activate the fire alarm portion.

There is provided the fire sensing system for the railway carriage according to any one of claims 1 to 4 wherein the heat-generating device, which is ignitable, is a storage battery, and the box body is a storage battery case (Claim 5).

In the fire sensing system for the railway carriage according to claim 5, the ignitable heat-generating device is the storage battery, and a fire caused by the storage battery installed in the storage battery case of the box body will be sensed through the constitution recited in claims 1 to 4 of the above.

There is provided the fire sensing system for the railway carriage according to claim 5 wherein the storage battery case is provided with: a first compartment in which the storage battery is placed and the auxiliary feeder circuit is wired; a secondary compartment in which the switch part is arranged; and a partition that insulates an interval between the first compartment and the secondary compartment (Claim 6).

In the fire sensing system for the railway carriage according to claim 6, due to a fire caused by the storage battery arranged in the first compartment of the storage battery case, the auxiliary feeder circuit wired in the first compartment will be electrified. On the other hand, since the switch part is arranged in the secondary compartment insulated from the first compartment with the partition, there is no danger that the switch part itself is burnt out before the primary feeder circuit and the auxiliary feeder circuit are turned off upon the electrification of the auxiliary feeder circuit.

### [EFFECT OF INVENTION]

Since the present invention is structured as explained hereinabove, it enables to improve the sensing accuracy of a fire sensing system for a railway carriage in which to sense a fire caused by heat-generating devices installed in a box body mounted on the railway carriage.

### [BRIEF EXPLANATION OF DRAWING]

FIG. 1 schematically illustrates the circuit diagram of a railway carriage provided with a fire sensing system for a railway carriage according to the embodiment of the present invention.
FIG. 2 is a partial extract from the circuit diagram of FIG. 1 that indicates an electrical flow in a normal state (when a fire alarm portion is not activated).
FIG. 3 is a partial extract from the circuit diagram of FIG. 1 that indicates an electrical flow when a fire starts.
FIG. 4 is a partial extract from the circuit diagram of FIG. 1 that indicates an electrical flow when the fire alarm portion is activated.
FIG. 5 is a three-dimensional perspective diagram that schematically indicates the condition of a storage battery when a fire starts.
FIG. 6 (a) and FIG. 6 (b) are both three-dimensional perspective diagrams that schematically indicate the condition of the storage battery when a fire starts in conventional arts.

### [EMBODIMENTS CARRYING OUT THE PRESENT INVENTION]

Hereinafter, the best modes for carrying out the present invention will be described with reference to the accompanying drawings. Here, parts that are the same as or equivalent to those of the prior arts are indicated by the same reference numerals, and the detailed description thereof will be omitted.

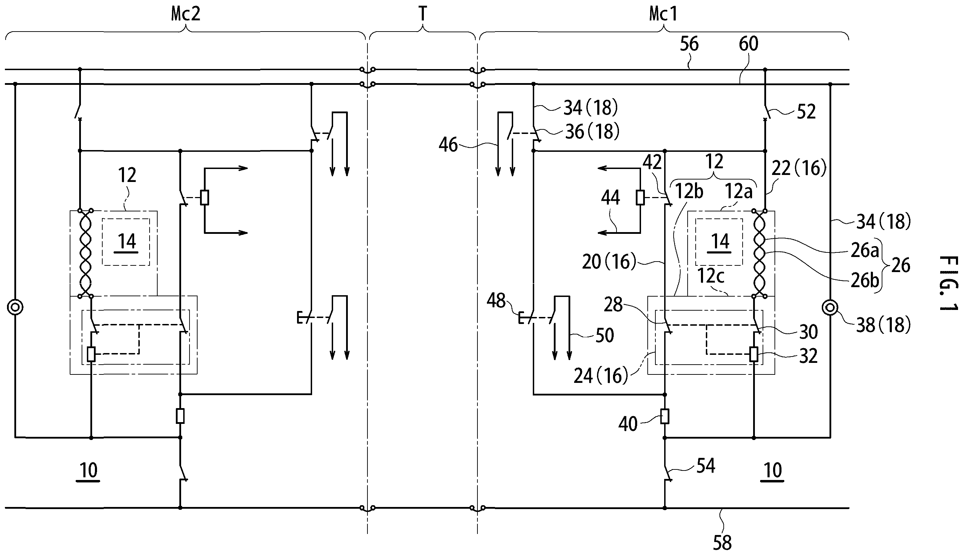

FIG. 1 schematically illustrates the circuit structure regarding the whole organization of a railway carriage to which a fire sensing system for a railway carriage 10 according to the embodiments of the present invention is adopted. In the examples shown in FIG., the railway carriage is three-car trains containing electrically controlled carriages Mc1, Mc2 and a trailer carriage T. Each of the electrically controlled carriages Mc1 and Mc2 has a storage battery case 12 mounted thereon, and a storage battery 14 is stored in the storage battery case 12. The fire sensing system for the railway carriage 10 is each provided in the electrically controlled carriages Mc1 and Mc2 together with the storage battery case 12. Here, each of the fire sensing systems for the railway carriage 10 in the electrically controlled carriages Mc1 and Mc2 has an identical structure. When the storage battery case 12 is mounted on the trailer carriage T as needed, the fire sensing system for the railway carriage 10 will be also provided on the trailer carriage T.

The fire sensing system for the railway carriage 10 is provided with a fire sensing portion 16 that senses a fire caused by the storage battery 14 and a fire alarm portion 18 to be activated when the fire sensing portion 16 senses the fire caused by the storage battery 14. The fire sensing portion 16 includes a primary feeder circuit 20 to be electrified in a normal state, an auxiliary feeder circuit 22 arranged parallel to the primary feeder circuit 20 and electrified when a heat-generating device causes a fire, and a switch part 24.

The storage battery case 12 is divided into a first compartment 12a in which the storage battery 14 is mounted and the auxiliary feeder circuit 22 is wired, and a secondary compartment 12b in which the switch part 24 is arranged. An interval between the first compartment 12a and the secondary compartment 12b is insulated with a partition 12c such as a fire-protection wall that has heat-resistant properties and low thermal conductivity. The side walls, the bottom wall and the ceiling, except the partition 12c of the storage battery case 12, also have heat-resistant properties. Note that the primary feeder circuit 20 is not wired in the first compartment 12a. Accordingly, the primary feeder circuit 20 and the switch part 24 are arranged in a place not directly affected by the heat generated from the fire in the storage battery 14. As explained hereinafter, the switch part 24 works to turn off the primary feeder circuit 20 and the auxiliary feeder circuit 22 upon the electrification of the auxiliary feeder circuit 22.

The auxiliary feeder circuit 22 is provided with a short-circuit induction wiring 26. This short-circuit induction wiring 26 is configured in such a manner that a pair of parallel wires 26a, 26b are spirally twisted, these wires 26a, 26b being insulated from each other with a coating layer and being wired within the storage battery case 12. When the storage battery 14 causes a fire, the interior temperature of the storage battery case 12 rises, thereby melting the coating layer that insulates the pair of parallel wires 26a, 26b. The pair of parallel wires 26a, 26b are then short-circuited so as to place both end portions of the short-circuit induction wiring 26 in a conductive condition. This will eventually make the auxiliary feeder circuit 22 conductive.

Here, it would be preferable for the short-circuit induction wiring 26 to be installed in a wave formation to cover the whole inner surface of the storage battery case 12. If this is not possible, at least the short-circuit induction wiring 26 should be installed at places that could be mostly affected by temperature rises of a fire caused by the storage battery 14, for example, a ceiling surface corresponding to the area where the storage battery 14 is installed.

The switch part 24 includes a primary normally opened contact 28 arranged in series with the primary feeder circuit 20, an auxiliary normally opened contact 30 arranged in series with the auxiliary feeder circuit 22, and a first circuit breaker 32 arranged in series with the auxiliary feeder circuit 22. This first circuit breaker 32 works to switch the primary normally opened contact 28 and the auxiliary normally opened contact 30 to a circuit break position upon the electrification of the auxiliary feeder circuit 22. As an example, an electromagnetic contact is used for the primary normally opened contact 28 and the auxiliary normally opened contact 30 while an electromagnetic switch provided with a trip coil is used for the first circuit breaker 32.

The fire alarm portion 18 is provided with a fire alarm circuit 34 being turned off in a normal state and electrified upon the deactivation of the primary feeder circuit 20 as a trigger. The fire alarm circuit 34 includes a normally closed contact 36 that activates the fire alarm portion 18. Further, the fire alarm circuit 34 includes a fire alarm buzzer 38 installed on a driver stand, etc. as a means of a fire alarm.

Moreover, the primary feeder circuit 20 is provided with a secondary circuit breaker 40 that turns off the electrification of the normally closed contact 36 while the primary feeder circuit 20 is turned off. As an example, an electromagnetic contact is used for the normally closed contact 36 while an electromagnetic switch provided with a trip coil is used for the secondary circuit breaker 40.

Here, regarding the storage battery case 12 in FIG. 1, each position between the first compartment 12a in which the storage battery 14 is placed and the auxiliary feeder circuit 22 is wired and the second compartment 12b in which the switch part 24 is arranged may be vertically replaced. In addition, in FIG. 1 each position between the primary normally opened contact 28 in the switch part 24 as well as the auxiliary feeder circuit 22 and the first circuit breaker 32 may be also vertically replaced.

Further, the primary feeder circuit 20 is provided with a normally opened contact 42. A TEMS communication circuit 44 is provided so that the train control system (TEMS) of the railway carriages will be informed of the state that the primary feeder circuit 20 is conductive, that is, in a normal state, through the normally opened contact 42. Still further, a TEMS communication circuit 46 is provided so that the TEMS is informed of an emergency, that is, a fire outbreak through the normally closed contact 36 of the fire alarm circuit 34. Yet still further, there are also provided a fire-alarm forced stoppage switch 48, which manually and forcibly stops the fire alarm circuit 34, and a TEMS communication circuit 50 which informs the TEMS of the state that the fire-alarm forced stoppage switch 48 has been activated. Referential numerals 52 and 54 in FIG. 1 are a circuit breaker and an earthing switch, respectively.

The primary feeder circuit 20 and the auxiliary feeder circuit 22 of the above are both connected to a power source through lines 56, 58 in each of the electrically controlled carriages Mc1 and Mc2. A referential numeral 60 is a line that comprises a part of the fire alarm circuit 34.

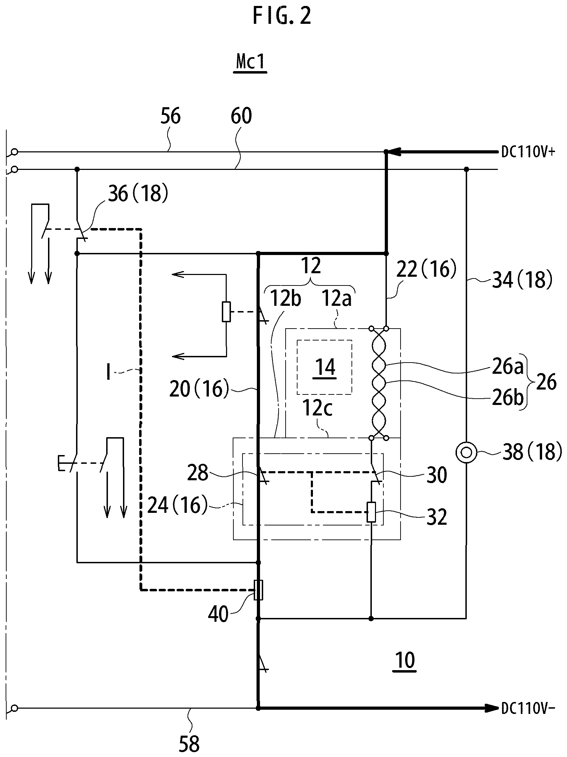

Assuming that the storage battery 14 in the storage battery case 12 of the electrically controlled carriage Mc1 in FIG. 1 causes a fire, the series of steps sensing the fire in the fire sensing system for the railway carriage 10 will be explained by referring to FIGS. 2 to 4. Note that specific values in FIGS. 2 to 4 are just examples, so that the present invention should not be limited thereby.

First, in a normal state in FIG. 2, that is, in a condition that the storage battery (heat-generating device) 14 does not cause any fire (or in a condition that the effect of heat caused by the fire in the storage battery 14 does not affect the interior of the storage battery case (box body) 12), the primary feeder circuit 20 of the fire alarm portion 16 is electrified (indicated with a bold line).

In this state, since the auxiliary feeder circuit 22 is in a non-electrified condition, in the switch part 24, the primary normally opened contact 28 arranged in series with the primary feeder circuit 20 with the secondary circuit breaker 40 and the auxiliary normally opened contact 30 arranged in series with the auxiliary feeder circuit 22 will not be switched to a circuit break position. Instead, the primary normally opened contact 28 and the auxiliary normally opened contact 30 are both kept in a conduction position. In this normal state, the primary feeder circuit 20 is not turned off by the switch part 24, and the primary feeder circuit 20 is thus kept in a conduction state.

Further, in the condition that the primary feeder circuit 20 is electrified, since the secondary circuit breaker 40 provided in the primary feeder circuit 20 is in an electrified condition, a current I is applied to the normally closed contact 36 of the fire alarm circuit 34 through the secondary circuit breaker 40. Accordingly, the normally closed contact 36 of the fire alarm circuit 34 will be kept in a circuit break position, so that the fire alarm buzzer 38 provided in the fire alarm circuit 34 is placed in a non-activating condition.

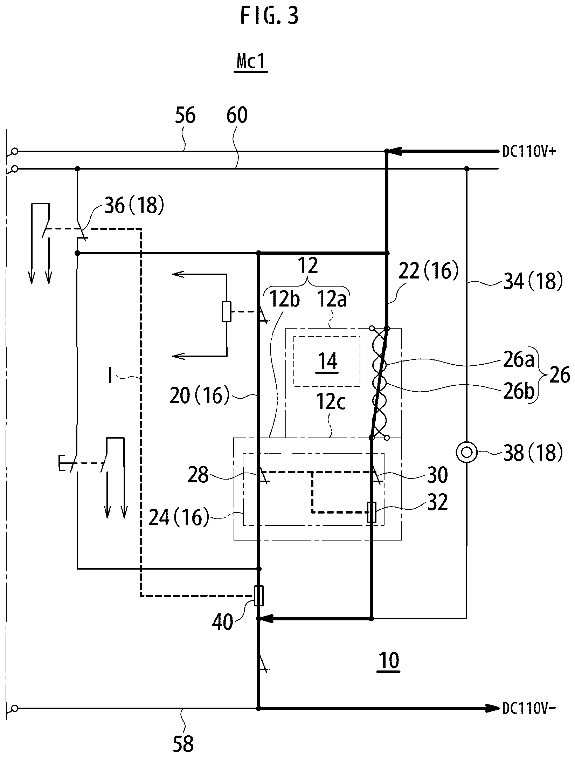

On the other hand, in case of an emergency in FIG. 3, that is, in the condition that the storage battery 14 causes a fire (or in a condition that the effect of heat caused by the fire in the storage battery 14 affects the interior of the storage battery case 12), the auxiliary feeder circuit 22 arranged parallel to the primary feeder circuit 20 is electrified (indicated with a bold line). Specifically, the coating layer of the short-circuit induction wiring 26 in the auxiliary feeder circuit 22 will be melted by heat, so that the pair of parallel wires 26a, 26b are short-circuited so as to electrify the auxiliary feeder circuit 22.

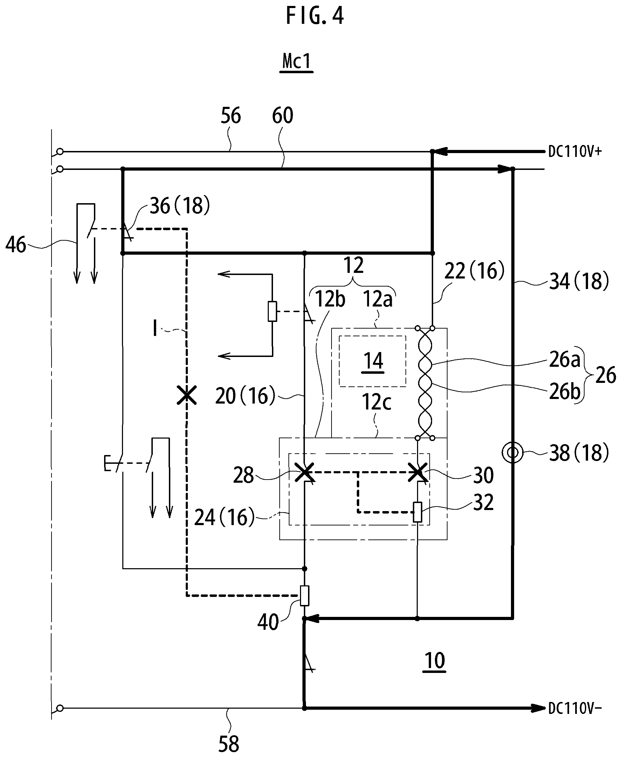

Upon the electrification of the auxiliary feeder circuit 22, as shown in FIG. 4, in the switch part 24, the primary normally opened contact 28 and the auxiliary normally opened contact 30 will be switched to a circuit break position by means of the first circuit breaker 32 arranged in series with the auxiliary feeder circuit 22. As a result, the primary feeder circuit 20 and the auxiliary feeder circuit 22 are both turned off. Then, upon the deactivation of the primary feeder circuit 20 as a trigger, the fire alarm circuit 34 of the fire alarm portion 18 is electrified so as to activate the fire alarm portion 18.

Specifically, by turning off the primary feeder circuit 20, the current I, which is applied from the secondary circuit breaker 40 arranged in the primary feeder circuit 20 to the normally closed contact 36 in the fire alarm circuit 34, will be turned off. Accordingly, the normally closed contact 36 in the fire alarm circuit 34 is switched to a connecting position, thereby electrifying the fire alarm circuit 34 (indicated with a bold line) so as to activate the fire alarm buzzer 38. In the example of FIG., upon the activation of the fire alarm buzzer 38, the TEMS communication circuit 46 is electrified through the normally closed contact 36 in the fire alarm circuit 34. By these steps, the TEMS will be notified of an emergency, that is, a fire outbreak.

As discussed hereinabove, in the fire sensing system for the railway carriage 10 according to the embodiments of the present invention, upon the electrification of the auxiliary feeder circuit 22 as the initiator, the fire alarm portion 18 will be activated while the primary feeder circuit 20 and the auxiliary feeder circuit 22 are turned off with the switch part 24. Consequently, even if the primary feeder circuit 20 and the auxiliary feeder circuit 22 are burnt out and thus turned off, the fire alarm circuit 34 can be still electrified. This structure of the circuits will thus allow the fire alarm portion 18 to be activated without interruption.

Further, in the storage battery case 12, due to the fire caused by the storage battery 14 arranged in the first compartment 12a, the short-circuit induction wiring 26 also wired in the first compartment 12a will be short-circuited so as to electrify the auxiliary feeder circuit 22. Note that, by installing the short-circuit induction wiring 26 in such a manner as to cover the whole inner surface of the storage battery case 12 (schematically shown in FIG. 5), the short-circuit induction wiring 26 can be placed nearby a fire location F regardless of where the fire location is. Thus, the coating layer of the short-circuit induction wiring 26 where placed nearby the fire location will be melted upon temperature increase and be short-circuited. By applying the short-circuit induction wiring 26 in this manner, the whole inner surface of the storage battery case 12 can be, in a sense, a fire sensing portion. This will enable to sense a fire at an early stage after the storage battery 14 causes the fire. Note that, since the short-circuit induction wiring 26 will not be in a conductive condition unless short-circuited, it will not cause any misdetection, for example, detecting temperature variations caused by the sunlight, etc.

The switch part 24 is arranged in the secondary compartment 12b insulated from the first compartment 12a with a partition. That is, the switch part 24 is arranged in a place not directly affected by the heat of a fire in the storage battery 14. Accordingly, in the switch part 24, upon the electrification of the auxiliary feeder circuit 22, there is no danger that the switch part 24 itself will be burnt out before the primary feeder circuit 20 and the auxiliary feeder circuit 22 are turned off. Further, the secondary circuit breaker 40 of the primary feeder circuit 20 is also arranged in a place not directly affected by the heat of a fire in the storage battery 14. Accordingly, there is no danger that the secondary circuit breaker 40 will be burnt out before the fire alarm buzzer 38 is activated while turning off the electrification of the normally closed contact 36 of the fire alarm circuit 34.

According to the embodiments of the present invention, it would be possible to improve the sensing accuracy of the fire sensing system for the railway carriage 10 in which to sense a fire in the heat-generating device installed in the box body mounted on the railway carriage.

The embodiments of the present invention have been exemplified with storage batteries installed in a storage battery case as heat-generating devices; however, it should be recognized that the present invention should be applicable for any fire sensing systems of the heat-generating devices mounted on a box body and difficult to immediately confirm a fire visibly.

### [EXPLANATION FOR REFERENCES]

10: Fire sensing system for railway carriage, 12: Storage battery case, 12a: First compartment, 12b: Second compartment, 12c: Partition, 14: Storage battery, 16: Fire sensing portion, 18: Fire alarm portion, 20: Primary feeder circuit, 22: Auxiliary feeder circuit, 24: Switch part, 26: Short-circuit induction wiring, 26a, 26b: Parallel wires, 28: primary normally opened contact, 30: Auxiliary normally opened contact, 32: First circuit breaker, 34: Fire alarm circuit, 36: Normally closed contact, 38: Fire alarm buzzer, 40: Second circuit breaker, 42: Normally opened contact, Mc1, Mc2: Electrically controlled carriages

## Claims

1. A fire sensing system (10) for a railway carriage (Mc1,Mc2) that senses a fire caused by a heat-generating device (14) installed in a box body (12) mounted on the railway carriage (Mc1,Mc2), the fire sensing system (10) comprising: a fire sensing portion (16) that senses a fire in the heat-generating device (14); and a fire alarm portion (18) to be activated when the fire sensing portion (16) senses the fire, wherein the fire sensing portion (16) includes: a primary feeder circuit (20) to be electrified in a normal state; an auxiliary feeder circuit (22) that is arranged parallel to the primary feeder circuit (20) and that is electrified due to the fire in the heat-generating device; (14) and a switch part (24) that turns off the primary feeder circuit (20) and the auxiliary feeder circuit (22) upon the electrification of the auxiliary feeder circuit (22), the primary feeder circuit (20) and the switch part (24) are arranged in a place not directly affected by heat of the heat-generating device (14), and the fire alarm portion (18) is provided with a fire alarm circuit (34) that is turned off in a normal state and is electrified upon deactivation of the primary feeder circuit (20) as a trigger.

2. The fire sensing system (10) for the railway carriage (Mc1,Mc2) according to claim 1 wherein the auxiliary feeder circuit (22) is provided with a short-circuit induction wiring (26), the short-circuit induction wiring (26) being structured in: a pair of parallel lead wires (26a,26b) in which to be insulated from each other with a coating layer; being wired in the box body (12); and making the pair of parallel lead wires (26a,26b) short-circuited by melting the coating layer as temperature in the box body (12) rises.

3. The fire sensing system (10) for the railway carriage (Mc1,Mc2) according to claim 1 or claim 2 wherein the switch part (24) includes: a primary normally opened contact (28) arranged in series with the primary feeder circuit (20); an auxiliary normally opened contact (30) arranged in series with the auxiliary feeder circuit (22); and a first circuit breaker (32) that is arranged in series with the auxiliary feeder circuit (22) and that switches the primary normally opened contact (28) and the auxiliary normally opened contact (30) to a circuit break position upon the electrification of the auxiliary feeder circuit (22).

4. The fire sensing system (10) for the railway carriage (Mc1,Mc2) according to any one of claims 1 to 3 wherein the fire alarm circuit (34) includes a normally closed contact (36) to activate the fire alarm portion (18), and the primary feeder circuit (20) is provided with a secondary circuit breaker (40) that switches the normally closed contact (36) to a connecting position when turned off.

5. The fire sensing system (10) for the railway carriage (Mc1,Mc2) according to any one of claims 1 to 4 wherein the heat-generating device (14), which is ignitable, is a storage battery (14), and the box body (12) is a storage battery case (12).

6. The fire sensing system (10) for the railway carriage (Mc1,Mc2) according to claim 5 wherein the storage battery case (12) is provided with: a first compartment (12a) in which the storage battery (14) is placed and the auxiliary feeder circuit (22) is wired; a secondary compartment (12b) in which the switch part (24) is arranged; and a partition (12c) that insulates an interval between the first compartment (12a) and the secondary compartment (12b).

## Patentansprüche

1. Brandmeldesystem (10) für einen Eisenbahnwaggon (Mcl, Mc2), das einen Brand erfasst, der durch eine Wärmeerzeugungsvorrichtung (14) verursacht wird, die in einem am Eisenbahnwaggon (Mcl, Mc2) montierten Kastenkörper (12) installiert ist, wobei das Brandmeldesystem (10) umfasst: Einen Brandmeldeteil (16), der ein Feuer in der Wärmeerzeugungsvorrichtung (14) erfasst, und einen Feueralarmteil (18), der zu aktivieren ist, wenn der Brandmeldeteil (16) das Feuer erfasst, wobei
der Brandmeldeteil (16) umfasst: Einen primären Speisekreis (20), der im Normalzustand elektrisch zu beaufschlagen ist; einen Hilfsspeisekreis (22), der parallel zum primären Speisekreis (20) angeordnet ist und der aufgrund des Feuers in der Wärmeerzeugungsvorrichtung (14) elektrisch zu beaufschlagen ist; und einen Schaltteil (24), der den primären Speisekreis (20) und den Hilfsspeisekreis (22) bei der elektrischen Beaufschlagung des Hilfsspeisekreises (22) abschaltet;
der primäre Speisekreis (20) und der Schaltteil (24) an einem Ort angeordnet sind, der nicht direkt von der Wärme der Wärmeerzeugungsvorrichtung (14) beeinflusst wird, und
der Brandmeldeteil (16) mit einem Brandmeldekreis (34) versehen ist, der im Normalzustand ausgeschaltet ist und ausgelöst durch die Deaktivierung des primären Speisekreises (20) elektrisch beaufschlagt wird.

2. Brandmeldesystem (10) für den Eisenbahnwaggon (Mcl, Mc2) nach Anspruch 1, wobei der Hilfsspeisekreis (22) mit einer Kurzschluss-Induktionsverdrahtung (26) versehen ist, wobei die Kurzschluss-Induktionsverdrahtung (26) strukturiert ist in: Einem Paar paralleler Zuleitungsdrähte (26a, 26b), die voneinander mit einer Überzugsschicht zu isolieren und die im Kastenkörper (12) verdrahtet sind; wobei das Paar paralleler Zuleitungsdrähte (26a, 26b) durch Schmelzen der Überzugsschicht kurzgeschlossen wird, wenn die Temperatur im Kastenkörper (12) steigt.

3. Brandmeldesystem (10) für den Eisenbahnwaggon (Mcl, Mc2) nach Anspruch 1 oder Anspruch 2, wobei der Schaltteil (24) umfasst: Einen primären, normalerweise geöffneten Kontakt (28), der in Reihe mit dem primären Speisekreis (20) angeordnet ist; einen normalerweise geöffneten Hilfskontakt (30), der in Reihe mit dem Hilfsspeisekreis (22) angeordnet ist; und einen ersten Kreisunterbrecher (32), der in Reihe mit dem Hilfsspeisekreis (22) angeordnet ist und der den primären, normalerweise geöffneten Kontakt (28) und den normalerweise geöffneten Hilfskontakt (30) bei der elektrischen Beaufschlagung des Hilfsspeisekreises (22) in eine Kreis-Unterbrechungsposition schaltet.

4. Brandmeldesystem (10) für den Eisenbahnwaggon (Mcl, Mc2) nach einem der Ansprüche 1 bis 3, bei dem der Brandmeldekreis (34) einen normalerweise geschlossenen Kontakt (36) zum Aktivieren des Feueralarmteils (18) umfasst und der primäre Speisekreis (20) mit einem sekundären Kreisunterbrecher (40) versehen ist, der den normalerweise geschlossenen Kontakt (36) in eine Verbindungsposition schaltet, wenn er ausgeschaltet ist.

5. Brandmeldesystem (10) für den Eisenbahnwaggon (Mcl, Mc2) nach einem der Ansprüche 1 bis 4, bei dem die entzündliche Wärmeerzeugungsvorrichtung (14) eine Speicherbatterie (14) ist und der Kastenkörper (12) ein Speicherbatteriekasten (12) ist.

6. Brandmeldesystem (10) für den Eisenbahnwaggon (Mcl, Mc2) nach Anspruch 5, bei dem der Speicherbatteriekasten (12) versehen ist mit: Einem ersten Fach (12a), in das die Speicherbatterie (14) eingesetzt ist und in der der Hilfsspeisekreis (22) verdrahtet ist; einem sekundären Fach (12b), in dem der Schaltteil (24) angeordnet ist; und einer Abtrennung (12c), die einen Zwischenraum zwischen dem ersten Fach (12a) und dem sekundären Fach (12b) isoliert.

## Revendications

1. Système de détection d'incendie (10) pour un véhicule ferroviaire (Mc1, Mc2) qui détecte un incendie causé par un dispositif de génération de chaleur (14) installé dans un corps de boîtier (12) monté sur le véhicule ferroviaire (Mcl, Mc2), le système de détection d'incendie (10) comprenant :
une portion de détection d'incendie (16) qui détecte un incendie dans le dispositif de génération de chaleur (14) et une portion d'alarme d'incendie (18) destinée à être activée lorsque la portion de détection d'incendie (16) détecte l'incendie, dans lequel
la portion de détection d'incendie (16) inclut : un circuit d'alimentation primaire (20) destiné à être électrifié dans un état normal ; un circuit d'alimentation auxiliaire (22) qui est agencé parallèlement au circuit d'alimentation primaire (20) et qui est électrifié en raison de l'incendie dans le dispositif de génération de chaleur (14), et une partie de commutation (24) qui éteint le circuit d'alimentation primaire (20) et le circuit d'alimentation auxiliaire (22) lors de l'électrification du circuit d'alimentation auxiliaire (22),
le circuit d'alimentation primaire (20) et la partie de commutation (24) sont agencés dans un emplacement non directement affecté par la chaleur du dispositif de génération de chaleur (14), et
la portion d'alarme d'incendie (18) est pourvue d'un circuit d'alarme d'incendie (34) qui est éteint dans un état normal et est électrifié lors de la désactivation du circuit d'alimentation primaire (20) en tant que déclenchement.

2. Système de détection d'incendie (10) pour le véhicule ferroviaire (Mc1, Mc2) selon la revendication 1, dans lequel le circuit d'alimentation auxiliaire (22) est pourvu d'un câblage d'induction de court-circuit (26), le câblage d'induction de court-circuit (26) étant structuré en : une paire de fils conducteurs parallèles (26a, 26b) dans laquelle destinés à être isolés l'un de l'autre avec une couche de revêtement ; étant câblé dans le corps de boîtier (12) ; et faisant en sorte que la paire de fils conducteurs parallèles (26a, 26b) soient court-circuités en faisant fondre la couche de revêtement lorsque la température dans le corps de boîtier (12) augmente.

3. Système de détection d'incendie (10) pour le véhicule ferroviaire (Mcl, Mc2) selon la revendication 1 ou la revendication 2, dans lequel la partie de commutation (24) inclut : un contact primaire normalement ouvert (28) agencé en série avec le circuit d'alimentation primaire (20) ; un contact auxiliaire normalement ouvert (30) agencé en série avec le circuit d'alimentation auxiliaire (22) ; et un premier disjoncteur (32) qui est agencé en série avec le circuit d'alimentation auxiliaire (22) et qui commute le contact primaire normalement ouvert (28) et le contact auxiliaire normalement ouvert (30) à une position de coupe-circuit lors de l'électrification du circuit d'alimentation auxiliaire (22).

4. Système de détection d'incendie (10) pour le véhicule ferroviaire (Mcl, Mc2) selon l'une quelconque des revendications 1 à 3, dans lequel le circuit d'alarme d'incendie (34) inclut un contact normalement fermé (36) pour activer la portion d'alarme d'incendie (18), et le circuit d'alimentation primaire (20) est pourvu d'un disjoncteur secondaire (40) qui commute le contact normalement fermé (36) à une position de connexion lorsqu'il est éteint.

5. Système de détection d'incendie (10) pour le véhicule ferroviaire (Mcl, Mc2) selon l'une quelconque des revendications 1 à 4, dans lequel le dispositif de génération de chaleur (14), qui est allumable, est une batterie de stockage (14), et le corps de boîtier (12) est un boîtier de batterie de stockage (12).

6. Système de détection d'incendie (10) pour le véhicule ferroviaire (Mcl, Mc2) selon la revendication 5, dans lequel le boîtier de batterie de stockage (12) est pourvu de : un premier compartiment (12a) dans lequel la batterie de stockage (14) est placé et le circuit d'alimentation auxiliaire (22) est câblé ; un compartiment secondaire (12b) dans lequel la partie de commutation (24) est agencée ; et une cloison (12c) qui isole un intervalle entre le premier compartiment (12a) et le compartiment secondaire (12b).
